# EUROPEAN PATENT APPLICATION

(11) **EP 1 494 050 A1**
(43) Date of publication of application: **05.01.2005**
(21) Application number: 04014295.2
(22) Date of filing: 18.06.2004
(51) Int. Cl.: G02B 6/25, B24B 19/22, G02B 6/26

(54) **Optical fiber end surface processing apparatus**

(30) Priority: 18.06.2003 JP 2003173989; 29.08.2003 JP 2003306819
(71) Applicant: NHK SALES COMPANY LIMITED, TOKYO (JP)
(72) Inventor: Iijima, Yoshimi, Koto-ku Tokyo (JP)
(74) Representative: Reichel, Wolfgang, Dipl.-Ing.

(57) **Abstract**

Disclosed is an optical fiber end surface processing apparatus (100) capable of cutting an optical fiber end surface smoothly and accurately without leaving a core-like (navel-like) processing mark of the rotation center of the cutter on the optical fiber end surface or without making the optical fiber end surface a rough surface. The optical fiber end surface processing apparatus (1) is equipped with a cutter (1) rotatable by a drive source (13) and a guide member (4) provided with a guide hole (5) extending therethrough, the cutter (1) being contained in a case (11), the guide member (4) being provided in the case (11) such that the cutter (1) and the guide hole (5) are opposed to each other, the optical fiber being inserted into the guide hole (5) of the guide member (4) to be thereby guided toward the cutter (1) until it abuts the cutter (1), thus cutting the optical fiber end surface by the cutter (1) that rotates, wherein the optical fiber end surface abuts the cutter (1) at a position deviated from the rotation center of the cutter (1).

## Description

### TECHNICAL FIELD

The present invention relates to an optical fiber end surface processing apparatus, inclusive of both stationary and portable type ones, for cutting an optical fiber end surface into a flat surface, a semispherical surface (convex or concave), etc. by means of a cutter.

### BACKGROUND ART

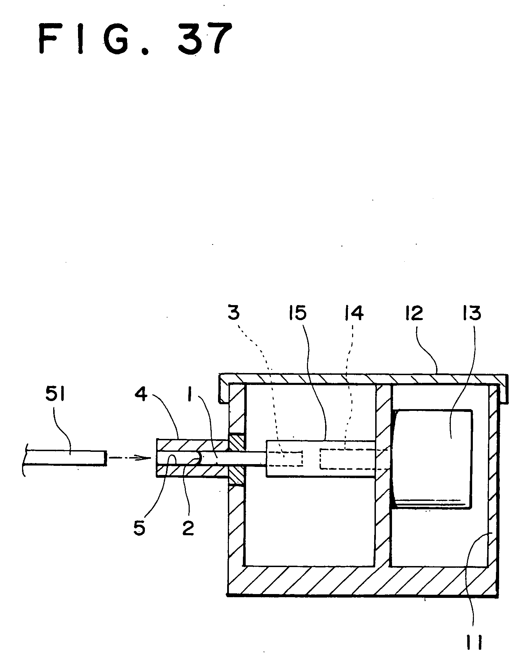

JP 2004-42249 A proposes a conventional apparatus for performing cutting processing on an optical fiber end surface by means of a cutter. As shown in Fig. 37, the apparatus proposed in the above-mentioned publication comprises a motor 13 provided inside a case 11, a coupling 15 serving as a member to be connected, which is connected to a drive shaft 14 of the motor 13, a cutter 1 detachably attached to the coupling 15, and a guide member 4 having a guide hole 5, into which an optical fiber 51 is inserted to abut the cutter 1 for the cutting of the end surface of the optical fiber 51; the optical fiber 51 is inserted into the guide hole 5 of the guide member 4, and its end surface is subjected to cutting by the cutter 1 that rotates.

However, in the above conventional optical fiber end surface processing apparatus, in which the optical fiber is simply inserted into the guide hole of the guide member, a thin optical fiber becomes rather unstable inside the guide hole and is allowed to move during cutting by the rotating cutter, making it impossible to effect the end surface processing with high precision.

In view of the above problem, it is a first object of the present invention to provide an optical fiber end surface processing apparatus that allows end surface cutting with high precision even in the case of an optical fiber end surface processing apparatus of the type in which the optical fiber inserted into the guide hole is chucked (held and secured) during cutting and in which cutting is effected with the axis of the optical fiber being matched with the rotation center of the cutter.

Further, in the above-described conventional optical fiber end surface processing apparatus, cutting is performed with the axis of the optical fiber being matched with the rotation center of the cutter, and the cutter is formed accordingly. Further, optical fiber end surface processing is performed by rotating the cutter, so that, when the axis of the optical fiber is matched with the axis (rotation center) of the cutter, there is the possibility of the rotation center of the cutter leaving a core-like (navel-like) cutting mark at the axial center of the optical fiber end surface, which adversely affects the light transmission characteristics of the optical fiber.

In view of this problem, it is a second object of the present invention to provide an optical fiber end surface processing apparatus in which no core-like (navel-like) cutting mark of the rotation center of the cutter is left at the end surface of the optical fiber, and to make it possible to adapt the same apparatus to optical fibers of different diameters through replacement of the cutter.

Further, while suitable for use as a stationary apparatus, the conventional optical fiber end surface processing apparatus using a cutter is not suited for use as a portable apparatus. Thus, it is a third object of the present invention to provide an optical fiber end surface processing apparatus capable of performing optical fiber end surface processing when used as a portable apparatus. Further, this optical fiber end surface processing apparatus can be carried about in a separated form.

Further, the conventional optical fiber end surface processing apparatus leaves still much to be improved in terms of the construction of the guide member, the positional relationship between the guide member and the cutter, etc. For example, since the guide member is equipped with no means for securing the inserted optical fiber, it is not possible to perform cutting with high accuracy, nor is it possible to adjust the contact pressure between the optical fiber end surface and the cutter, the length of the cut portion, etc. Thus, it is a fourth object of the present invention to provide an optical fiber end surface processing apparatus improved in terms of the construction of the guide member, the positional relationship between the guide member and the cutter, etc.

### DISCLOSURE OF THE INVENTION

The optical fiber end surface processing apparatus of the present invention is a processing apparatus that performs cutting on an optical fiber end surface with a cutter, the processing apparatus including: the cutter that can be rotated by a drive source; and a guide member provided with a guide hole extending therethrough, the cutter being contained in a case, the guide member being provided to the case such that the cutter and the guide hole are opposed to each other, the optical fiber being guided toward and into abutment against the cutter while being inserted into the guide hole of the guide member so that the optical fiber end surface is cut by the cutter that rotates, the processing apparatus being characterized in that the cutter and the guide member are arranged such that a rotation center of the cutter and an axis of the guide hole of the guide member are offset from the same axis.

Due to this arrangement, solely by inserting the optical fiber into the guide hole of the guide member, its end surface abuts the rotating cutter to thereby effect cutting. Further, since the end surface processing is performed with a cutter, it is possible to perform end surface processing selectively, on not only the core portion but also on the clad portion and the jacket, with the connector being attached. Further, since the end surface of the optical fiber is deviated from the rotation center of the cutter when it abuts the same, no "navel-like" processing mark is left on the optical fiber end surface, making it possible to perform a satisfactory end surface processing.

Further, the optical fiber end surface processing apparatus is characterized in that the cutter exists on an end surface of a mounting shaft so as to be offset from an axis of the shaft mainly in a radial direction, and the guide member is arranged such that the axis of the guide hole thereof is offset from an axis of a mounting shaft of the cutter.

Due to this arrangement, the optical fiber end surface undergoes cutting while abutting the cutter in a state in which it is radially deviated from the rotation center of the cutter, so that no core portion (navel portion) remains as a cutting mark at the center of the optical fiber end surface, making it possible to perform an end surface processing leading to a satisfactory light transmission characteristic. Further, according to the present invention, the optical fiber end surface undergoes cutting while abutting the cutter in a state radially deviated from the rotation center of the cutter, so that it is possible to perform cutting not only on a single ribbon optical fiber but also on a multi-ribbon optical fiber. Further, the optical fiber abuts the cutter in a state radially deviated from the rotation center of the cutter solely by inserting it into the guide hole of the guide member, so that the optical fiber can undergo satisfactory end surface processing solely by inserting it into the guide hole of the guide member.

Further, the optical fiber end surface processing apparatus of the present invention is characterized in that a plurality of the cutters extend mainly radially with respect to an axis of an end surface of a shaft portion.

This helps to achieve an improvement in terms of cutting efficiency and cut surface precision.

Further, the optical fiber end surface processing apparatus of the present invention includes: a cutter that can be rotated by a drive source; and a guide member provided with a guide hole extending therethrough, the cutter being contained in a case, the guide member being provided to the case such that the guide member is opposed to the case and that an axis of the guide hole is matched with a rotation center of the cutter, the optical fiber being guided toward and into abutment against the cutter while being inserted into the guide hole of the guide member so that the optical fiber end surface is cut by the cutter that rotates, the processing apparatus being characterized in that the guide member has a chucking function.

Due to this arrangement, even in the case of an apparatus in which cutting is performed on the optical fiber end surface with the axis of the optical fiber being matched with the rotation center of the cutter, the optical fiber inserted into the guide member is retained and secured by chucking during cutting, so that it is possible to perform optical fiber end surface cutting with high precision.

Further, the optical fiber end surface processing apparatus of the present invention is characterized in that the case constitutes a holding portion or that the holding portion is integrally or detachably provided on the case.

Due to this arrangement, since the case constitutes a holding portion or the holding portion is integrally or detachably provided on the case, it is possible to perform processing on an optical fiber end surface with the apparatus being carried about or with the holding portion being held.

Further, the optical fiber end surface processing apparatus of the present invention is characterized in that the case or the holding portion contains a battery or contains a battery and a charger, whereby it is possible to perform optical fiber end surface processing while carrying about the apparatus as a cordless apparatus.

Further, the optical fiber end surface processing apparatus of the present invention is characterized in that the case includes: a drive portion containing a motor or containing a motor and a battery; and a processing portion comprising a cutter and a guide member, the drive portion and the processing portion being separable from each other.

Due to this arrangement, it is possible to perform optical fiber end surface processing while holding the case or the holding portion by hand, and when the case is separable or the holding portion is detachable with respect to the main body, separation is possible, which is convenient from the viewpoint of portability.

Further, the optical fiber end surface processing apparatus of the present invention is characterized in that the cutter is provided detachably on a motor drive shaft directly or through the intermediation of a member to be connected to the motor drive shaft, whereby the apparatus can be adapted to optical fibers of various diameters.

Further, the optical fiber end surface processing apparatus of the present invention is characterized in that the guide member is mounted on a motor mounting member shared by the motor.

Due to this arrangement, the guide member and the motor drive shaft can be arranged in the same axial direction, so that it is possible for the cutter to perpendicularly abut the end surface of the optical fiber inserted into the guide member; in particular, it is possible to perform flat surface processing with high accuracy.

Further, the optical fiber end surface processing apparatus of the present invention is characterized in that the guide member is mounted to the case or a motor mounting member shared by the motor such that an axial movement amount can be adjusted.

Further, the optical fiber end surface processing apparatus of the present invention is characterized in that the guide member has a male screw provided on its outer peripheral surface, and that a screw hole that can be threadedly engaged with the guide member is provided in the case or the motor mounting member shared by the motor, the guide member being threadedly engaged with the guide member, the axial movement amount of the guide member being adjustable through normal and reverse rotation of the guide member.

This makes it possible to adjust the axial movement amount of the guide member, so that it is possible to adjust the feeding amount (approaching amount) with respect to the cutter of the optical fiber inserted into the guide member, so that it is possible to adjust the cutting amount of the optical fiber end surface.

Further, the optical fiber end surface processing apparatus of the present invention is characterized in that the guide member has a chucking function.

Further, the optical fiber end surface processing apparatus of the present invention is characterized in that the guide member is formed as a truncated cone with the guide hole and has a chuck structure with a plurality of slits, and that a male screw is provided on an outer peripheral surface of the guide member, the optical fiber inserted into the guide hole being chucked by threadedly engaging the male screw with a truncated-cone-shaped screw hole provided in the case or the motor mounting member shared by the motor.

Further, the optical fiber end surface processing apparatus of the present invention is characterized in that the guide member is formed in a short-axis or a truncated-cone-shaped configuration with a guide hole and has a chuck structure with a plurality of slits, and that a guide member mounting hole provided in the case or the mounting member shared by the motor is a circular hole of a truncated cone shape or of a uniform diameter, the optical fiber inserted into the guide hole being chucked by mounting the guide member by inserting the guide member into the guide member mounting hole.

Due to this arrangement, it is possible to perform cutting on the optical fiber in a state in which it is chucked, thereby achieving an improvement in cutting accuracy.

Further, the optical fiber end surface processing apparatus of the present invention is characterized in that the guide member is mounted to a movement amount adjusting member allowing adjustment of axial movement amount with respect to the cutter.

In this construction also, it is possible to adjust the axial movement amount of the guide member, so that it is possible to adjust the cutting amount of the optical fiber end surface.

Further, the optical fiber end surface processing apparatus of the present invention is characterized in that a guide member mounting surface of the case or the motor mounting member shared by the motor and the end surface of the guide member are provided with scales allowing measurement of a rotating amount of the guide member, thereby making it possible to measure the axial movement amount of the guide member.

Thus, by rotating the guide member in the normal or reverse direction to adjust it to the scale, it is possible to detect the axial movement amount of the guide member. Thus, it is possible to adjust the cutting amount of the optical fiber inserted into the guide member.

Further, the optical fiber end surface processing apparatus of the present invention is characterized in that one or a plurality of the guide holes of the guide member are provided at offset positions of the guide member.

Due to this arrangement, the optical fiber abuts the cutter in a state in which it is radially offset from the rotation center of the cutter solely by inserting it into the guide hole of the guide member, so that no "navel-like" processing mark remains on the processed end surface; further, regardless of whether it is of a single-ribbon or a multi-ribbon optical fiber, the optical fiber can undergo end surface processing in a satisfactory manner solely by inserting it into the guide hole of the guide member.

It is to be noted that, in the present invention, the term "optical fiber" covers both a glass optical fiber and a plastic optical fiber. Further, in the present invention, the optical fiber end surface processing includes formation into an arbitrary configuration, such as flat and semispherical (concave or convex) ones.

The optical fiber end surface processing apparatus of the present invention, constructed as described above, provides the following advantages:
(1) Solely by inserting the optical fiber into the guide hole of the guide member, its end surface abuts the rotating cutter to be thereby cut. In an apparatus in which the axis of the guide hole of the guide member and the rotation center of the cutter are matched with each other, it is possible to perform cutting into an arbitrary configuration, such as flat and semispherical (convex or concave) ones, by changing the configuration of the cutter. Further, since it is an end surface processing by a cutter, it is possible to perform end surface processing selectively not only on the core portion but also the clad portion and the jacket, with the connector attached to the optical fiber.
(2) The optical fiber end surface undergoes cutting while abutting the cutter in a state in which it is radially deviated from the rotation center of the cutter, so that no core portion (navel portion) remains as a processing mark at the center of the optical fiber end surface, making it possible to perform an end surface processing leading to a satisfactory light transmission characteristic. Further, since the optical fiber end surface undergoes cutting while abutting the cutter in a state radially deviated from the rotation center of the cutter, it is possible to perform cutting not only on a single ribbon optical fiber but also on a multi-ribbon optical fiber.
(3) When the optical fiber end surface processing apparatus is formed as a portable type apparatus in which the case constitutes a holding portion or the holding portion is integrally or detachably provided on the case, it is possible to perform optical fiber end surface processing while carrying about the apparatus or holding the holding portion. Further, since a battery or a charger can be contained in the apparatus, it is possible to realize a cordless apparatus, which is still more convenient for performing end surface processing while carrying about the apparatus.
(4) When the cutter is detachable, it allows replacement according to the optical fiber diameter or the end surface configuration to be obtained, thus making it possible to adapt the apparatus to optical fibers of various diameters and to perform end surface processing with high accuracy.

The optical fiber end surface processing apparatus is composed of a drive portion and a processing portion, which are detachably connected with each other, so that the apparatus can be separated into the drive portion and the processing portion, which is convenient in carrying about the apparatus; further, by replacing the processing portion, the same apparatus can be used for the end surface processing of optical fibers of various diameters.
(5) According to the present invention, it is possible to adjust the axial movement amount of the guide member, so that it is possible to adjust the feeding amount (approaching amount), with respect to the cutter, of the optical fiber inserted into the guide member and therefore to adjust the cutting amount of the optical fiber end surface.
(6) Further, in the present invention, the guide member is endowed with a chucking function, so that it is possible to perform cutting on the optical fiber inserted into the guide hole in a state in which it is chucked, thereby achieving an improvement in cutting accuracy.

### BRIEF DESCRIPTION OF THE DRAWINGS

In the accompanying drawings:
Fig. 1 is a perspective view of Embodiment 1 of the present invention;
Fig. 2 is a sectional view of Embodiment 1 of the present invention;
Fig. 3 is a perspective view of a guide member;
Fig. 4 is a partially cutaway side view of the guide member;
Fig. 5 is a perspective view of an example of a cutter;
Fig. 6 is an exploded perspective view of Embodiment 2 of the present invention;
Fig. 7 is a sectional view of Embodiment 2 of the present invention;
Fig. 8 is an exploded perspective view of a guide member portion with a chucking function according to Embodiment 3 of the present invention;
Fig. 9 is a front view of the guide member with a chucking function;
Fig. 10 is a sectional view of the guide member with a chucking function;
Fig. 11 is a front view of a modification of the guide member;
Fig. 12 is a sectional view of a modification of the guide member;
Fig. 13 is a main portion perspective view of a means for measuring axial movement amount of the guide member;
Figs. 14(a) and 14(b) are explanatory side views showing modifications of the chuck structure of the guide member;
Fig. 15 is an explanatory view, partly in section, of Embodiment 4 of the present invention;
Fig. 16 is a perspective view showing an example of a construction making a holding portion detachable with respect to a case;
Fig. 17 is an explanatory sectional view of Embodiment 5 of the present invention;
Fig. 18 is an explanatory sectional view of Embodiment 6 of the present invention;
Fig. 19 is an explanatory sectional view of Embodiment 7 of the present invention;
Fig. 20 is an enlarged main portion explanatory sectional view of Embodiment 8 of the present invention;
Fig. 21 is a partially exploded perspective view of Embodiment 9 of the present invention;
Fig. 22 is an exploded perspective view of Embodiment 9 of the present invention;
Fig. 23 is a general perspective view of Embodiment 9 of the present invention;
Fig. 24 is a perspective view of a modification of the guide member;
Fig. 25 is a partially cutaway side view of the guide member;
Figs. 26(a) to 26(c) are explanatory views illustrating, in sequence of steps, an example of the way cutting is performed on an optical fiber end surface;
Fig. 27 is an explanatory front view of an example of the cutter used for the cutting;
Fig. 28 is a perspective view of an example of the cutter to be used in an optical fiber end surface processing apparatus of the present invention;
Fig. 29 is a front view of the cutter;
Fig. 30 is a side view of the cutter;
Fig. 31 is a central longitudinal sectional view of the cutter;
Fig. 32 is a perspective view showing a case in which two cutters are used in the optical fiber end surface processing apparatus of the present invention;
Fig. 33 is a perspective view showing a case in which three cutters are used;
Fig. 34 is a perspective view of an integral type cutter to be used in the optical fiber end surface processing apparatus of the present invention;
Fig. 35 is a main portion sectional view showing an example of the way cutting is performed on an end surface of an optical fiber with a connector;
Fig. 36 (a) is an enlarged front view of an example of the cutter used in a case in which the hole axis of the guide member and the rotation center of the cutter are matched with each other;
Fig. 36(b) is an enlarged main portion perspective view of the same; and
Fig. 37 is a sectional view of a conventional example.

### BEST MODE FOR CARRYING OUT THE INVENTION

A case contains a cutter that can be rotated by a drive source (motor), and the case is provided with a guide member having a guide hole extending therethrough so as to be opposed to the cutter; by inserting an optical fiber into the guide hole of the guide member, the optical fiber is guided toward the cutter until it abuts the same to be cut by the cutter that rotates.

This optical fiber end surface processing apparatus is of two types: an apparatus in which the guide hole of the guide member and the rotation center of the cutter are matched with each other, and an apparatus in which they are deviated from each other. In the latter apparatus, it is desirable that the cutter exist at an end surface of a mounting shaft so as to be offset mainly radially from the axis of the shaft and that the optical fiber end surface undergo cutting while abutting the cutter so as to be radially offset from the rotation center of the mounting shaft.

Further, it is desirable that the guide member allow adjustment of the axial movement amount and be endowed with a chucking function. In the following, embodiments of the present invention will be described in detail with reference to the drawings.

### [Embodiment 1]

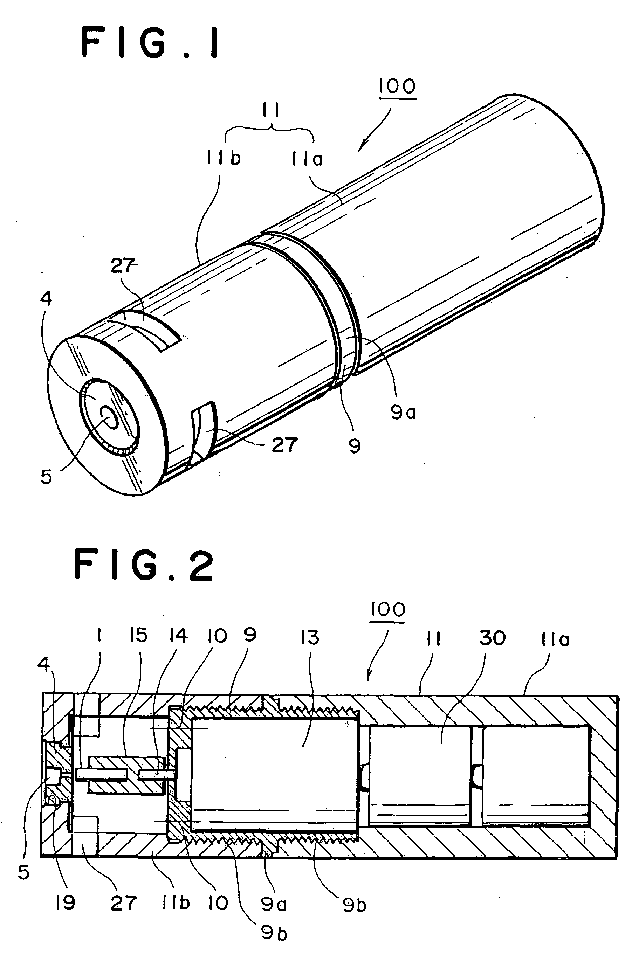

Fig. 1 is a perspective view of an optical fiber end surface processing apparatus according to Embodiment 1 of the present invention, and Fig. 2 is a sectional view of the optical fiber end surface processing apparatus of Embodiment 1 of the present invention.

In this optical fiber end surface processing apparatus, generally indicated by reference numeral 100 , a motor 13 is contained in a cylindrical case 11, and a cutter 1 is connected to a drive shaft 14 of the motor 13 through the intermediation of a coupling 15. In an end surface of the case 11, there is provided a guide member 4 having a guide hole 5 extending therethrough toward the cutter 1. The case 11 is composed of a cylindrical case main body 11a and a cylindrical cap body 11b, and the guide member 4 is provided in the end surface of the cap body 11b. Further, the case main body 11a constitutes a holding portion.

The motor 13 is fitted into a cylindrical motor mounting member 9 and are fixed by means of screws 10. The motor mounting member 9 has a screw 9b on its outer peripheral surface and a circumferentially protruding flange portion 9a substantially at the center with respect to the axial direction of its outer periphery. The case main body 11a and the cap body 11b are threadedly engaged with the screw 9b of the motor mounting member 9 to form an integral unit as the case 11.

The drive shaft 14 of the motor 13 protrudes on the cap body 11b side from the motor mounting member 9, and the cutter 1 is connected to the drive shaft 14 through the intermediation of the coupling 15; the end surface of the optical fiber inserted into the guide hole 5 of the guide member 5 abuts the cutter 1 rotated by the motor 13 to be thereby cut. Thus, the cutting is conducted inside the cap body 11b, and chips are generated inside the cap body 11b. Thus, it is desirable for the cap body 11b to be equipped with a discharge outlet 27 for discharging the chips.

Further, the case main body 11a contains batteries 30 serving as the power source for the motor 13. Thus, even in a place where there is no commercial power, it is possible to use the apparatus as a cordless one to perform cutting on an optical fiber end surface while carrying about the apparatus. Apart from the batteries 30, the case main body 11a may contain a charger (not shown). When a charger is contained, the batteries can be charged, so that it is advantageously possible to avoid power run-out.

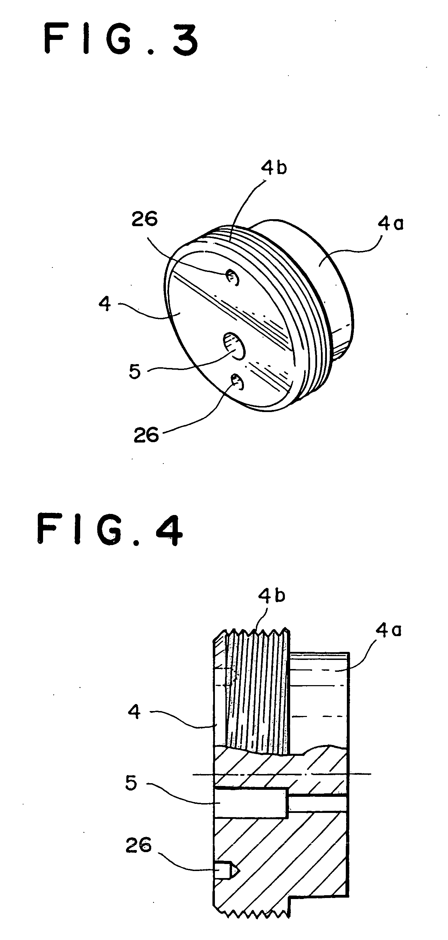

Figs. 3 and 4 are a perspective view and a partially cutaway side view of the guide member. In the guide member 4 of this embodiment, the guide hole 5 is provided at a position offset from the axis. The outer peripheral surface of this guide member 4 is threaded to form a screw 4b, which is screwed in a screw hole 19 provided in the end surface of the cap body 11b of the case 11 and is thereby mounted. The mounting and screw-in amount adjustment of this guide member 4 can be effected by inserting a jig into an operation recess 26 provided therein, and rotating the same. That is, by adjusting its screw-in amount, it is possible to adjust the axial movement amount of the guide member 4.

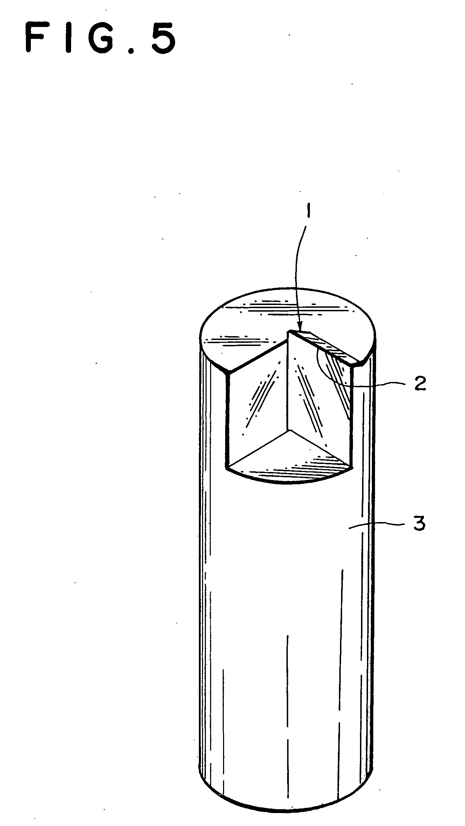

As shown in Fig. 5, in this embodiment, the cutter 1 exists at the end surface of a mounting shaft 3, and is offset from the shaft axis mainly in the radial direction. The cutter 1 is mounted to the drive shaft 14 through the intermediation of the coupling 15, with the axis of the mounting shaft 3 and the axis of the guide member 4 being matched with each other. Thus, even though the axis of the mounting shaft 3 and the axis of the guide member 4 are matched with each other, since the cutter 1 exists at the end surface of the mounting shaft 3 so as to be offset from the axis mainly in the radial direction, and the guide hole 5 of the guide member 4 is provided at a position offset from the axis of the guide member 4, inserting the optical fiber into the guide hole 5 of the guide member 4 results in the optical fiber being guided toward and abutting the cutter to be thereby cut. Reference numeral 2 indicates the edge of the cutter.

### [Embodiment 2]

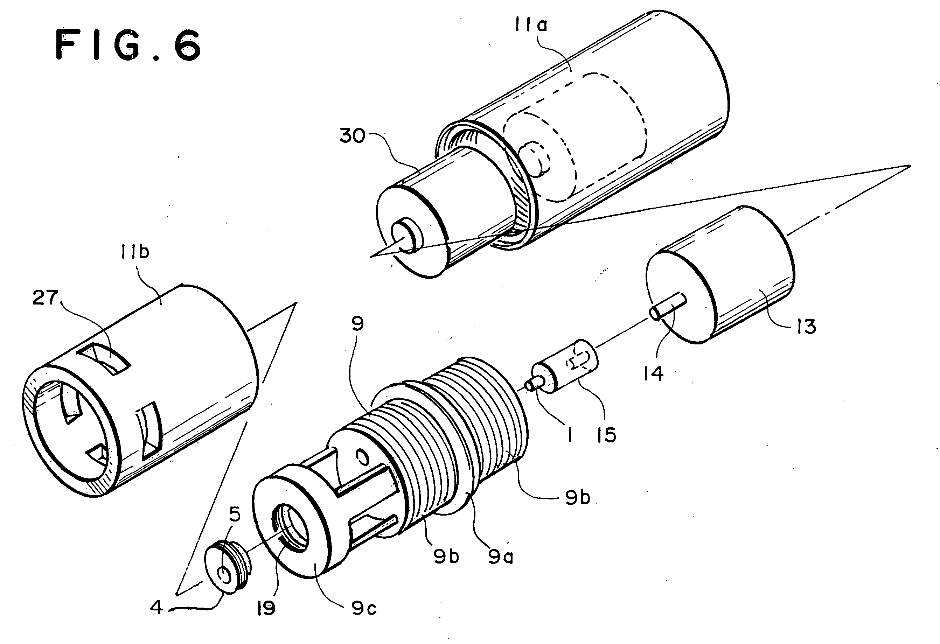

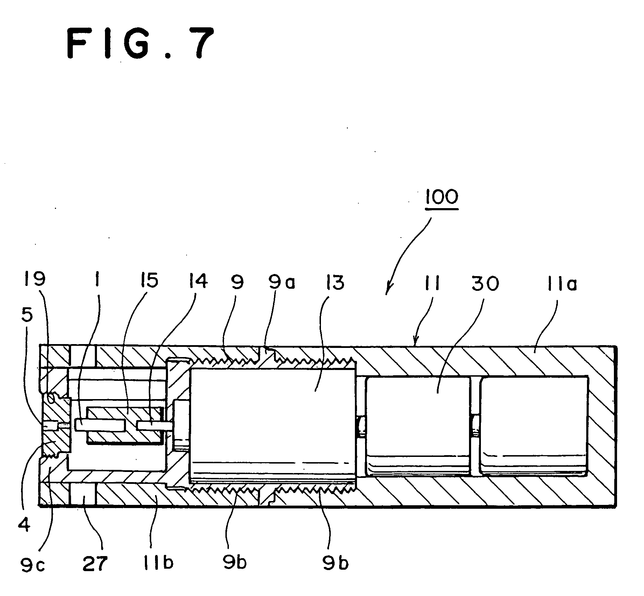

Figs. 6 and 7 are an exploded perspective view and a sectional view of an optical fiber end surface processing apparatus according to Embodiment 2 of the present invention.

This embodiment is characterized in that the guide member 4 is mounted to the motor mounting member 9 shared by the motor 13. Otherwise, this embodiment is the same as Embodiment 1, so that the same components are indicated by the same reference numerals, and a detailed description of such components will be omitted. The motor mounting member 9 is equipped with a guide member mounting portion 9c flush with the end surface of the cap body 11b, and the guide member 4 is mounted by being screwed into the guide member mounting portion 9c of the motor mounting member 9.

In this form of supporting the guide member 4 and the cutter 1, mounting to the motor mounting member 9 is effected such that the axis of the mounting shaft 3 of the cutter 1 and the axis of the guide member 4 are in alignment with the axis of the drive shaft 14 of the motor 13. Thus, even if there is a change in the mounting state of the motor mounting member 9 with respect to the case 11 (the case main body 11a and the cap body 11b), the axis of the guide member 4 and the axis of the mounting shaft of the cutter 1 are not deviated from the above-mentioned axis, and cutting of an optical fiber can always be effected in a predetermined positional relationship. Thus, the end surface of the optical fiber inserted into the guide hole 5 of the guide member 4 can be cut by the cutter 1 with high accuracy.

Thus, in Embodiments 1 and 2, the optical fiber end surface processing apparatus 100 can be carried about by holding the case 11 or in a bag or the like, and it is possible to perform end surface processing on an optical fiber with the case 11 being held by hand.

### [Embodiment 3]

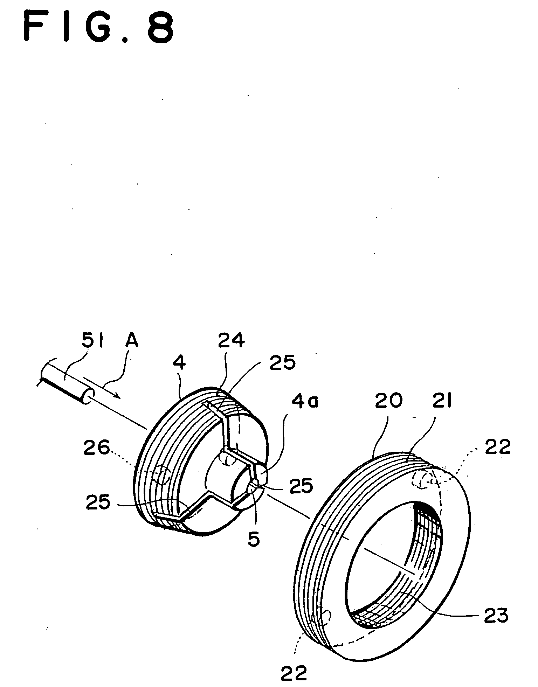

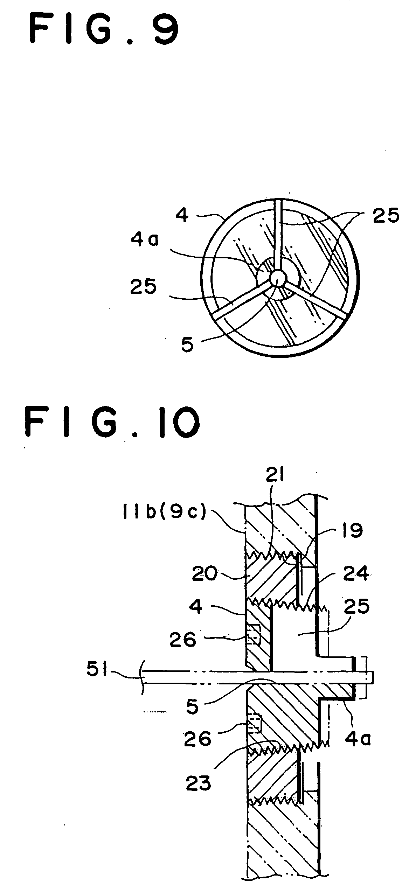

Fig. 8 is an exploded perspective view of the guide member portion, Fig. 9 is a front view of the guide member, and Fig. 10 is a sectional view of the guide member portion. This embodiment is characterized in that the guide member is endowed with a chucking function and an axial movement amount adjusting function. The guide member 4 is formed as a truncated cone (tapered shape) having the guide hole 5, and has a chuck structure with a plurality of slits 25, with a male screw 24 being formed on the outer peripheral surface thereof. A guide member adjusting screw 20 with a truncated-cone-shaped screw hole 23 is screwed into the end surface of the cap body 11b of the case 11 or the guide member mounting portion 9c of the motor mounting member 9 by means of a screw 21 provided on its outer peripheral surface, and the guide member 4 is mounted by being screwed into the truncated-cone-shaped (tapered) screw hole 23 of the guide member adjusting screw 20. Otherwise, this embodiment is the same as the above-described embodiments, so that the same components are indicated by the same reference numerals and a detailed description of such components will be omitted.

This guide member 4 has a chuck structure with three slits 25, and its outer peripheral surface is tapered, so that, when it is screwed in, its tapered outer peripheral surface is pressurized radially inwards, and the optical fiber inserted into the guide member 4 is held under an appropriate holding force.

More specifically, an optical fiber 51 is inserted in the direction of the arrow A in Fig. 8 into the guide hole 5 of the guide member 4 shallowly screwed in the guide member adjusting screw 20. When the insertion amount of the optical fiber 51 attains a predetermined amount as visually measured, a jig (not shown) is engaged with the recess 26, and the guide member 4 is screwed deep into the screw hole 23 of the guide member adjusting screw 20, as shown in Fig. 10. Since the guide member 4 has a chuck structure with three slits 25, its tapered (truncated-cone-shaped) outer peripheral surface is pressurized radially inwards by the tapered (truncated-cone-shaped) screw hole 23. Thus, the optical fiber 51 is held in the guide hole 5 under an appropriate holding force. That is, the optical fiber 51 is held by the guide member 4 in a stable manner. In this way, the apparatus is applicable no matter what the diameter of the optical fiber 51 may be.

In this case, when, in connection with the cutter 1, the optical fiber 51 excessively protrudes from the forward end of the protruding portion 4a or when it does not protrude from the forward end, the chucking is loosened to adjust the protruding amount of the optical fiber 51. After the adjustment, chucking is effected again. Then, after this adjustment (fine adjustment), the protruding amount of the optical fiber 51 is set again in order to determine with high accuracy the cutting position and the amount by which the optical fiber is cut by the cutter 1. This setting operation is possible by adjusting the screw-in amount of the guide member adjusting screw 20 with respect to the cap body 11b of the case 11 or the screw hole 19 of the motor mounting member 9.

As shown in Fig. 8, the guide member adjusting screw 20 is a ring-like movement amount adjusting member and has a screw 21 in its outer periphery. By changing the screw-in amount of this screw 21 with respect to the screw hole 19, the axial movement amount of the guide member adjusting screw 20 can be adjusted. The operation of screwing in the guide member adjusting screw 20 is effected by engaging a jig (not shown) with a pair of recesses 22 provided therein and by rotating it.

Further, the guide member adjusting screw 20 has in its inner periphery a tapered screw hole 23, and the guide member 4, which has a screw in its outer periphery, is detachably screwed into this screw hole 23. The outer peripheral surface (screw surface) of this guide member 4 is tapered, and a protrusion 4a is connected to one end thereof. Further, as shown in Fig. 9, in a portion including the protrusion 4a of the guide member 4, there are provided three slits 25.

In the side surface of the guide member 4, there are provided a pair of recesses 26 to be engaged with a screwing jig to make it rotatable. Fig. 10 shows these recesses 26.

In brief, the guide member 4 is formed as a truncated-cone-shaped member having the guide hole 5 at its center, and has a chuck structure with a plurality of slits 25; formed on the outer peripheral surface thereof is the male screw 24, which is screwed into the truncated-cone-shaped screw hole 23 provided in the case 11 or the motor mounting member 9, thereby making it possible to chuck (hold) the optical fiber 51 inserted into the guide hole 5.

In this way, the apparatus is applicable to all types of optical fiber 51, from ones with a large diameter to ones with a small diameter. In particular, it has conventionally been impossible to perform accurate processing on an optical fiber with a small diameter due to the narrow and flexible portion to be processed. With this guide member 4, in contrast, such an optical fiber can be firmly held during processing, so that accurate end surface processing is possible.

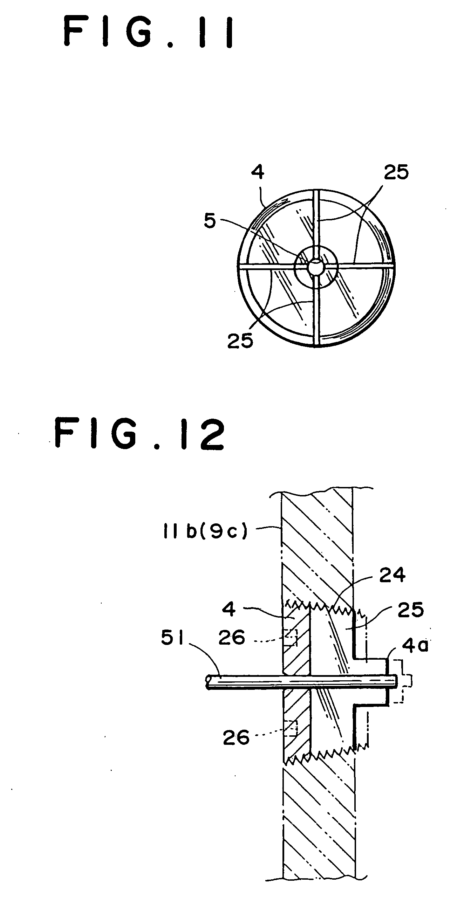

Figs. 11 and 12 are a front view of a modification of the guide member and a sectional view of the guide member portion thereof. In this example, there is no guide member adjusting screw, and the guide member 4 is directly screwed into the guide member mounting portion 9c in the end surface of the cap body 11b of the case 11 or the motor mounting member 9, with four slits 25 being provided in a part of the guide member 4. Otherwise, this modification is the same as the construction as shown in Figs. 8 through 10. In this example, no guide member adjusting screw is required. Since this guide member 4 has four slits 25, the portion divided by these slits 25 can be easily deformed. Thus, the automatic operation of the guide member 4 when chucking the optical fiber 51 can be nimbly performed.

This guide member 4 with a chucking function and the cutter 1 may be arranged, with the hole axis of the guide hole 5 of the guide member 4 and the rotation center of the cutter 1 being matched with each other, or may be arranged such that the guide hole 5 is at a position offset from the axis of the mounting shaft 3 of the cutter 1. In the case in which the hole axis of the guide hole 5 and the rotation center of the cutter 1 are deviated from each other, the apparatus is applicable even when the cutter 1 exists at the end surface of the mounting shaft 3 of the cutter 1 so as to be offset from the axis of the end surface mainly in the radial direction.

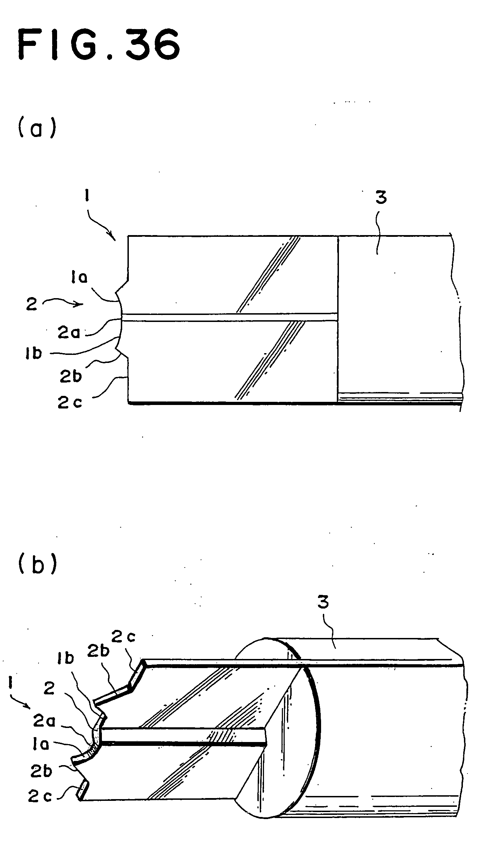

Figs. 36(a) and 36(b) show an example of the cutter 1 in the case in which the hole axis of the guide hole 5 of the guide member 4 and the rotation center (axis) of the cutter 1 are matched with each other. Fig. 36(a) is an enlarged front view of an example of the cutter and Fig. 36(b) is an enlarged main portion perspective view thereof in the case in which an optical fiber end surface is to be cut into a convex semispherical configuration. The cutter 1 is provided at the end surface 3a of the mounting shaft 3, and two cutters 1a and 1b form a concave semicircular shape; the center of the cutter edge 2 is a semicircular recess 2a, which is connected to inclined portions 2b and, further, to vertical portions 2c.

With this cutter 1, the optical fiber inserted into the guide hole 5 of the guide member 4 undergoes cutting, with its axial center abutting the rotation center of the cutter 1, so that it is cut into a semispherical, convex configuration. As stated above, the guide member 4 is endowed with a chucking function, so that the optical fiber inserted into the guide hole 5 of the guide member 4 is held and secured while being cut. Thus, it is possible to perform end surface processing with high accuracy.

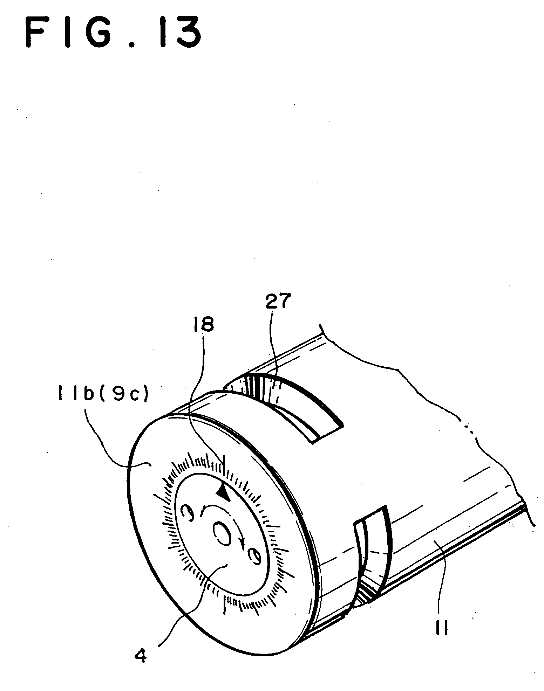

When there is provided a measuring means capable of performing measurement by matching the rotating amount of the guide member, it is advantageously possible to adjust the axial movement amount of the guide member. Fig. 13 is a main portion perspective view of a means for measuring the axial movement amount of the guide member. In this example, there is provided a scale 18 in the end surface of the cap body 11b of the case 11 or in the peripheral edge of the screw hole 19 of the guide member mounting portion 9c of the motor mounting member 9, and the axial movement amount of the guide member 4 can be measured by measuring the rotating amount of the guide member 4. Due to this arrangement, the axial movement amount of the guide member 4 can be easily adjusted solely by rotating the guide member 4 and matching it with the scale.

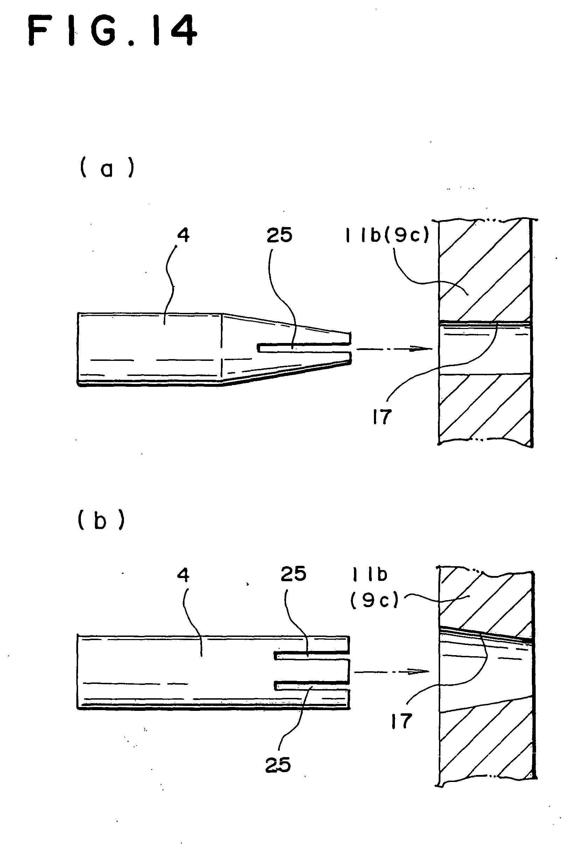

Further, the guide member 4 with the chucking function may also be formed as shown in Figs. 14(a) and 14(b). In Fig. 14(a), the guide member 4 is tapered, and has a chuck structure with a plurality of slits 25; the guide member mounting hole 17 is provided in the cap body 11b or the guide member mounting portion 9c of the motor mounting member, and the guide member 4 is mounted by being inserted into the guide member mounting hole 17, whereby the optical fiber inserted into the guide member 4 is chucked. In Fig. 14(b), the guide member 4 is formed as a short shaft with no tapered portion, and the guide member mounting hole 17 is tapered. With this guide member 4, chucking can be effected easily for end surface processing. In this case, the outer periphery of the guide member may be threaded, and the guide member mounting hole 17 may be formed as a screw hole.

### [Embodiment 4]

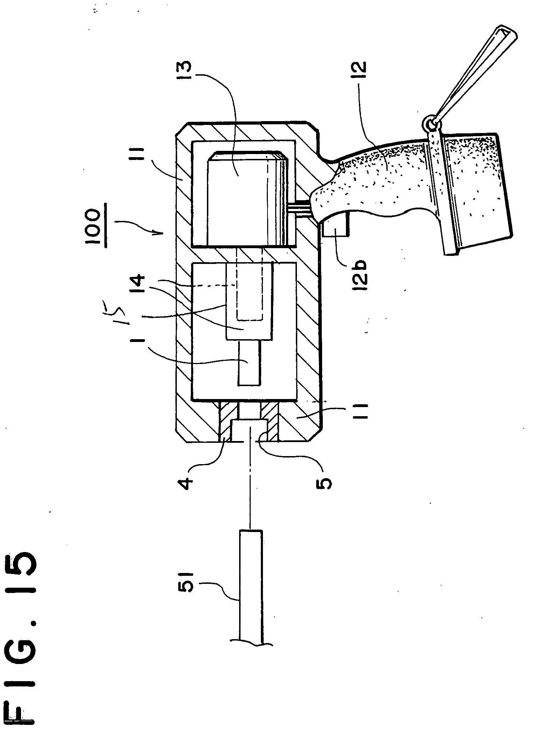

Fig. 15 is an explanatory view, partly in section, of an optical fiber end surface processing apparatus according to Embodiment 4 of the present invention. In this optical fiber end surface processing apparatus 100, a holding portion 12 is provided on the case 11 so as to be substantially perpendicular thereto, and the motor 13 is provided inside the case 11, with the cutter 1 being connected to the drive shaft 14 of the motor 13 through the intermediation of the coupling 15. The holding portion 12 contains a battery, a charger, etc. The holding portion 12 is equipped with a switch 12b, by means of which the processing apparatus 100 is opened and closed.

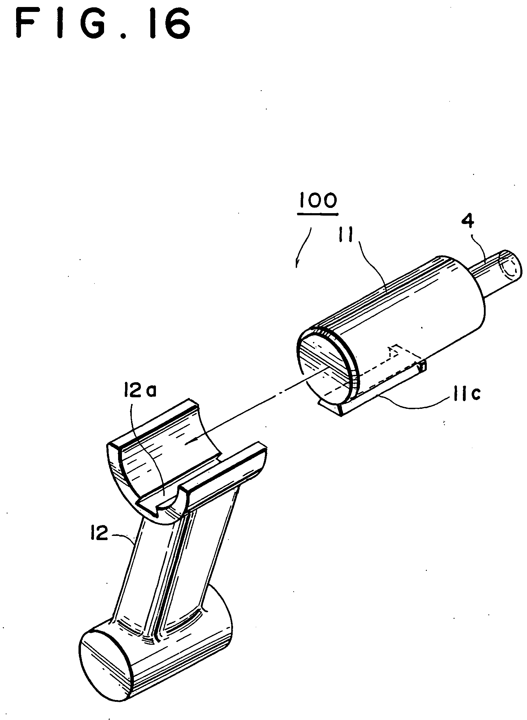

The holding portion 12 may be integrally fixed to the case 11 or may be detachably mounted thereto. The construction in which the holding portion 12 is detachable with respect to the case 11 allows adoption of a well-known conventional means. Fig. 16 shows an example thereof.

Fig. 16 is a perspective view showing an embodiment in which the holding portion is detachable with respect to the case. In this example, an engagement ridge 11c is formed on the lower surface of the case 11, an engagement groove 12a corresponding to the engagement ridge 11c is formed in the upper surface of the holding portion 12. The holding portion 12 is detachably mounted by fitting the engagement ridge 11c of the case 11 into the engagement groove 12a. The engagement ridge 11c and the engagement groove 12a are equipped with contacts (not shown) matched with and brought into contact with each other when the holding portion 12 is mounted to the case 11, whereby an electric circuit is connected.

In this manner, the cutter 1 can be rotated by the motor 13, and when the optical fiber 51 is inserted into the guide hole 5 of the guide member 4, the end surface of the optical fiber 51 abuts the cutter 1. Thus, when the cutter 1 is rotated by the motor 13 and the optical fiber 51 is inserted into the guide hole 5 of the guide member 4, the end surface of the optical fiber 51 abuts the rotating cutter 1 and undergoes end surface processing. These operations can be performed with the holding portion 12 being held by hand.

Further, in the case in which the holding portion 12 is detachably mounted to the case 11, the apparatus can be carried about, with the holding portion 12 detached from the case 11, which is convenient from the viewpoint of portability.

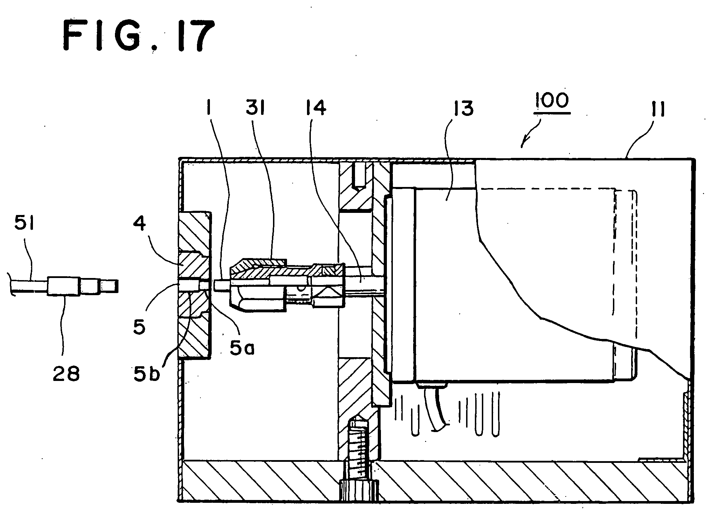

Further, it is desirable for the cutter 1 to be detachable and allow replacement according to the diameter of the optical fiber and the end surface configuration to be attained. The detachable construction allows adoption of a well-known conventional means. For example, it is possible to adopt a construction in which the cutter is made detachable by a collet chuck or the like. Fig. 17 shows an example thereof.

### [Embodiment 5]

Fig. 5 is an explanatory sectional view of Embodiment 5 of the present invention; the components that are the same as those of the above embodiments are indicated by the same reference numerals. In the optical fiber end surface processing apparatus 100 of this embodiment, the motor 13 is provided inside the case 11, and a collet chuck 31 is provided on the drive shaft of the motor 13, with the cutter 1 being detachably mounted to this collet chuck 31. While in this example the collet chuck 31 and the cutter 1 are situated inside the case 11, it is also possible for the collect chuck 31 to protrude out of the case 11. The guide member 4 is fixed to the case 11 so as to extend toward the interior of the case 11. The guide hole 5 of the guide member 4 opens at one end so as to face the forward end of the cutter 1, and the cutter 1 is not inserted into the guide hole 5. The guide hole 5 of this example is composed of a small diameter portion 5a and a large diameter portion 5b, and a connector 28 is attached to the optical fiber 51; the optical fiber 51 can be inserted into the guide hole 5 with the connector 28 attached thereto, and end surface processing can be conducted in this state.

### [Embodiment 6]

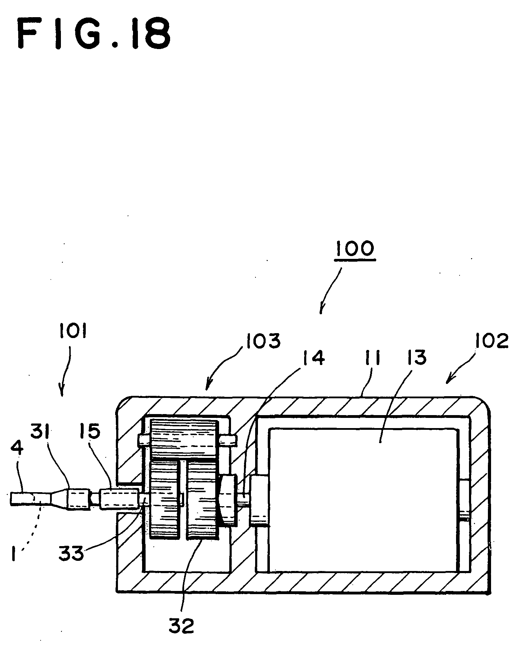

Fig. 18 is an explanatory sectional view of Embodiment 6 of the present invention; the components that are the same as those of Embodiments 4 and 5 are indicated by the same reference numerals. In this embodiment, a drive portion 102 constituted by the motor 13 and a processing portion 101 constituted by the cutter 1 and the guide member 4 are connected to each other through the intermediation of a speed reduction mechanism portion 103 constituted by a gear group 32. That is, the motor 13 is provided inside the case 11 to form the drive portion 102, and the speed reduction mechanism portion 103 constituted by the gear group 32 is connected to the drive shaft 14 of this motor 13; the collet chuck 31 is provided on the output shaft 33 of the speed reduction mechanism portion 103 through the intermediation of the coupling 15, and the processing portion 101 constituted by the cutter 1 and the guide member 4 is detachably mounted to the collet chuck 31. In this example, the drive portion 102 and the speed reduction mechanism portion 103 are integrated with each other inside the case 11, and the processing portion 101 alone is detachable.

### [Embodiment 7]

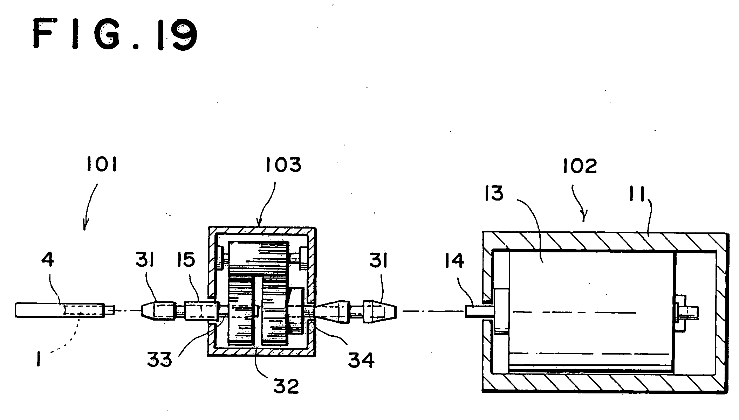

Fig. 19 is an explanatory sectional view of Embodiment 7 of the present invention; the components that are the same as those of Embodiments 4 through 6 are indicated by the same reference numerals. In this embodiment, the drive portion 102 constituted by the motor 13, the speed reduction mechanism portion 103 constituted by the gear group 32, and the processing portion 101 constituted by the cutter 1 and the guide member 4 are detachably provided, the portions allowing detachment from each other.

That is, the collect chuck 31 is provided on the input shaft 34 of the speed reduction mechanism portion 103 constituted by the gear group 32, and, by means of this collet chuck 31, the speed reduction mechanism portion 103 is made detachable with respect to the drive shaft 14 of the motor 13 contained in the case 11. Further, the collect chuck 31 is connected to the output shaft 33 of the speed reduction mechanism portion 103 through the intermediation of the coupling 15, and the processing portion 101 is detachably mounted to this collect chuck 31, whereby the drive portion 102, the speed reduction mechanism portion 103, and the processing portion 101 can be separated from each other.

While the embodiments shown in Figs. 17 through 19 have no holding portion and are used as stationary apparatuses, it is also possible for them to adopt the construction as shown in Figs. 15 and 16, in which the case 11 is equipped with the holding portion.

### [Embodiment 8]

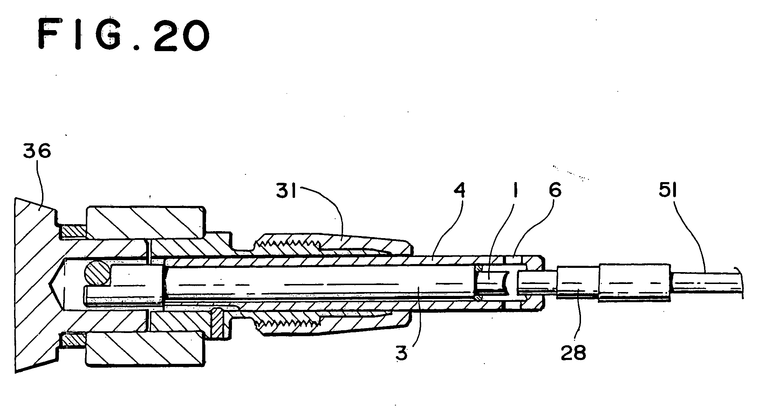

Fig. 20 is an explanatory main portion sectional view of Embodiment 8 of the present invention; the components that are the same as those of the above embodiments are indicated by the same reference numerals. In this embodiment, the collect chuck 31 is connected to the motor side through the intermediation of an electric clutch 36, and the driving of the motor is transmitted through the electric clutch 36.

### [Embodiment 9]

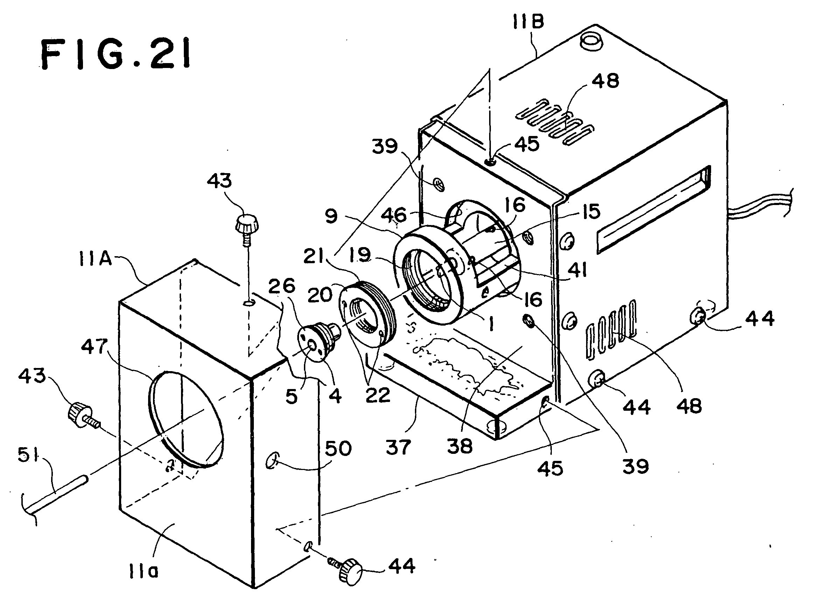

Figs. 21 through 23 are a partly exploded perspective view, an exploded perspective view, and a general perspective view of Embodiment 9 of the present invention; the components that are the same as those of the above embodiments are indicated by the same reference numerals.

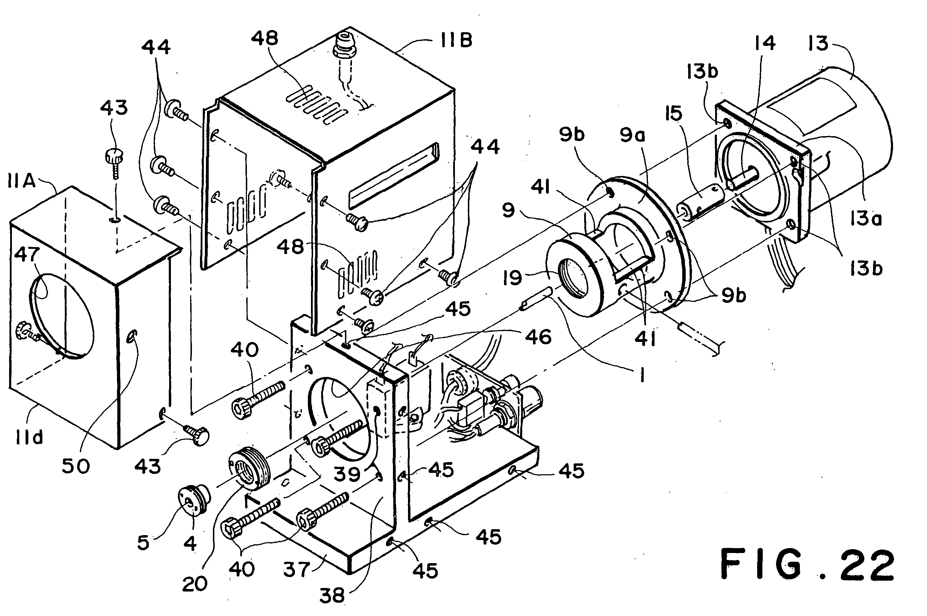

In general, the main portions of the processing apparatus 100 are contained in two cases 11A and 11B. The cases 11A and 11B are detachably mounted to a reverse-T-shaped base member 37 as shown in Figs. 21 and 22 accommodated in them by means of fixing screws 43 and 44. The base member 37 has in its end surfaces screw holes 45 into which the fixing screws 43 and 44 are to be screwed. An erect portion 38 of this base member 37 has a through-hole 46 with a large diameter. Further, the side plate 11d of the case 11A has a through-hole 47 which is substantially of the same diameter as the through-hole 46. The case 11B has a plurality of ventilation holes 48 for ventilating the interior of the case 11B.

Also, the motor mounting member 9, which is substantially cylindrical, is passed through the through-hole 46 of the erect portion 38. The motor 13 is fixed to the erect portion 38 of the base member 37 through the intermediation of a flange portion 9a at the end of the motor mounting member 9 by means of four screws 40 (see Fig. 22). For this purpose, screw passing holes 39 and 9b are provided in the erect portion 38 and the flange portion 9a, and screw holes 13b are provided in a bracket 13a of the motor 13. In this fixation state, the forward end of the motor mounting member 9 faces the through-hole 46 of the case 11A. The motor mounting member 9 is equipped with a pair of chip discharge outlets 41 extending therethrough in the radial direction. Further, at the center of the forward end of the motor mounting member 9, there is formed a screw hole 19 for mounting a guide member adjusting screw described below.

Further, as shown in Fig. 21, one end of the pipe-shaped coupling 15 is fixed to the drive shaft 14 of the motor 13 by means of a screw 16. The mounting shaft 3 of the cutter 1 is inserted into the other end portion of this coupling 15 and fixed by means of the screw 16 so as to allow replacement. The configuration of the cutter 1 used here is arbitrarily selected in order to attain a desired optical fiber end surface configuration; thus, the cutting edge is not restricted to one for flat work but may also be convex, concave, triangular, V-shaped, arcuate, etc.

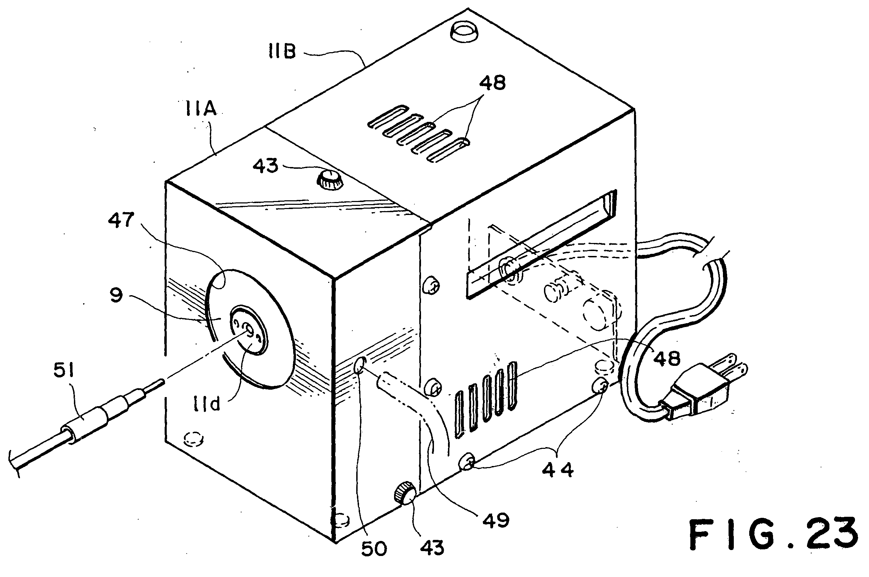

In this optical fiber end surface processing apparatus 100, the cutter 1 is fixed to the coupling 15 by means of the screw 16, and the cutter 1 is rotated by driving the motor 13. On the other hand, when end surface processing is to be performed on the optical fiber 51, the end portion of the optical fiber 51 is inserted in the direction of the arrow in Fig. 23, into the guide hole 5 of the guide member 4 shallowly screwed into the guide member adjusting screw 20.

The insertion amount of the optical fiber 51 as visually measured has reached a predetermined level, a jig (not shown) is engaged with the recesses 26, and the guide member 4 is screwed deep into the screw hole 23 of the guide member adjusting screw 20 as shown in Fig. 10. The guide member 4 has a chuck structure with three slits 25, so that its tapered outer peripheral surface is pressurized radially inwards. Thus, the optical fiber 51 is held under an appropriate holding force inside the guide hole 5. That is, the optical fiber 51 is held by the guide member 4 in a stable manner. In this way, the apparatus is applicable no matter what the diameter of the optical fiber 51 may be.

In this case, when, in connection with the cutter 1, the optical fiber 51 excessively protrudes from the forward end of the protruding portion 4a or when it does not protrude from the forward end thereof, the chucking is loosened to adjust the protruding amount of the optical fiber 51. After the adjustment, chucking is effected again. Then, after this adjustment (fine adjustment), the protruding amount of the optical fiber 51 is set again in order to determine with high accuracy the cutting position and the amount by which the optical fiber is cut by the cutter 1. This setting operation is possible by adjusting the screw-in amount of the guide member adjusting screw 20 with respect to the screw hole 19 of the motor mounting member 9.

Further, the guide member 4 or the guide member adjusting screw 20 is detachable with respect to the guide member adjusting screw 20 or the motor mounting member 9 by canceling the threaded engagement. Thus, a cutter replacement jig 49 is inserted into the screw hole 23, which is the mounting hole of the guide member 4, or through the screw hole 19, which is the mounting hole of the guide member adjusting screw 20, making it possible to replace the cutter 1 supported by the coupling 15. At this time, the forward end of the jig 49 is inserted into a through-hole 50 (see Fig. 23) provided in the case 11A, and the screw 16 screwed into the coupling 15 is loosened, whereby the cutter 1 is made free in the coupling 15.

As shown in Fig. 8, the guide member adjusting screw 20 is a ring-like movement amount adjusting member and has a screw 21 in its outer periphery. By changing the screw-in amount of this screw 21 with respect to the screw hole 19, the axial movement amount of the guide member adjusting screw 20 can be adjusted. It is to be noted that the operation of screwing in the guide member adjusting screw 20 is effected by engaging a jig with a pair of recesses 22 provided therein and by rotating it.

Further, the guide member adjusting screw 20 has in its inner periphery a tapered screw hole 23, and the guide member 4, which has a screw 24 in its outer periphery, is detachably screwed into this screw hole 23. The outer peripheral surface (screw surface) of this guide member 4 is tapered, and a protrusion 4a is connected to one end thereof. Further, as shown in Fig. 9, in a portion including the protrusion 4a of the guide member 4, there are provided three slits 25.

In the side surface of the guide member 4, there are provided a pair of recesses 26 to be engaged with a screwing jig to make it rotatable. Fig. 10 shows these recesses 26. Further, in the center line of the guide member 4, there is provided the guide hole 5 for introducing and chucking the optical fiber 51.

In brief, the guide member 4 is formed as a truncated-cone-shaped member having the guide hole 5 at its center, and has a chuck structure with a plurality of slits 25; formed on the outer peripheral surface thereof is the male screw 24, which is screwed into the truncated-cone-shaped screw hole 23 provided in the motor mounting member 9, thereby making it possible to chuck (hold) the optical fiber 51 inserted into the guide hole 5.

In this way, the apparatus is applicable to all types of optical fiber 51, from ones with a large diameter to ones with a small diameter. In particular, it has conventionally been impossible to perform accurate processing on an optical fiber with a small diameter due to the narrow and flexible portion to be processed. With this guide member 4, in contrast, such an optical fiber can be firmly held during processing, so that accurate end surface processing is possible. Further, it is possible to adjust the processing length while holding the optical fiber, whereby a still more accurate end surface processing is possible.

In this manner, in this optical fiber end surface processing apparatus 100, the cutter 1 and the guide hole 5 of the guide member 4 are arranged so as to be offset from the same axis, with the cutter 1 existing so as to extend mainly radially from the axis of the end surface 3a of the mounting shaft 1, so that, when the optical fiber 51 is inserted into the guide hole 5 of the guide member 4, the end surface of the optical fiber 51 abuts the cutter 1 at a position deviated from the rotation center thereof to be thereby cut. Thus, no core portion (navel portion) remains at the center of the optical fiber end surface as the cutting mark, thus making it possible to effect a satisfactory end surface processing.

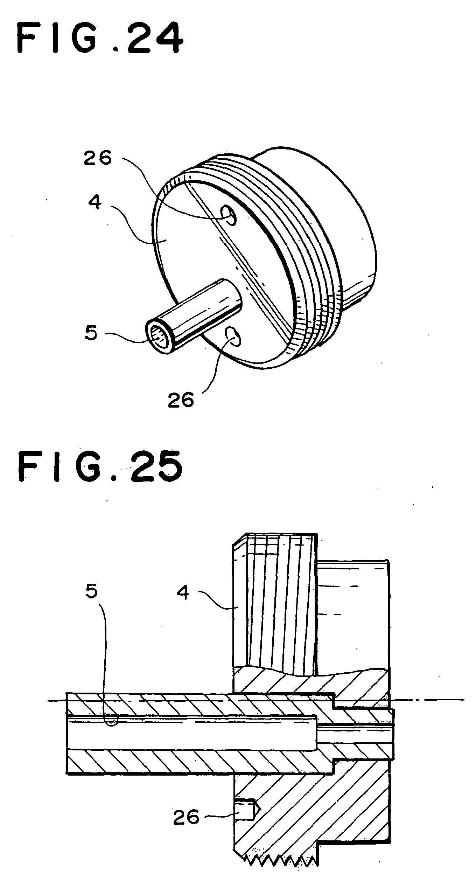

Figs. 24 and 25 are a perspective view and a partially cutaway front view of a modification of the guide member. In this example, the guide hole 5 of the guide member 4 is offset from the axis. With the guide member 4, even in the case of a processing apparatus in which the axis of the cutter 1 and the axis of the guide hole 5 of the guide member 4 are matched with each other, the guide member 4 of this modification is applicable through replacement.

Further, when a plurality of guide holes 5 are provided in the guide member 4 of this example, it is possible to simultaneously perform processing on the end surface of a multi-ribbon optical fiber.

### [Embodiment 10]

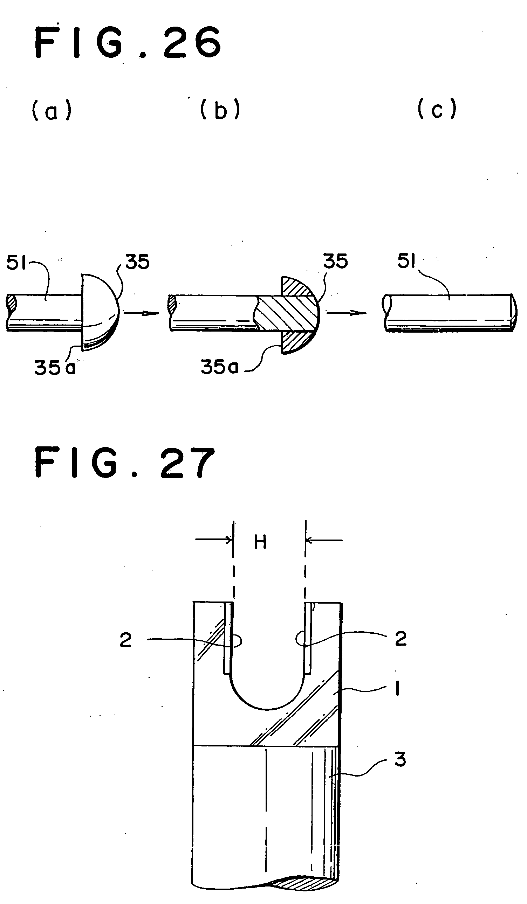

Further, even when the optical fiber 51 is one in which, as in the case of an optical fiber 51 with a lens 35 formed by a conventional processing method, the lens 35 protrudes beyond the diameter of the optical fiber 51, as shown in Fig. 26, it is possible, by adapting the cutter 1, to form an end surface as shown in Fig. 26 (c) by cutting the portion 35a protruding beyond the diameter of the optical fiber 51 by performing cutting (shaded portion 35a of Fig. 26(b)) as shown in Fig. 26(b). In this case, the cutter 1 is of a concave or a U-shaped type as shown in Fig. 27, with the cutting edge 2 being formed on the inner surface thereof and its width H corresponding to the diameter of the optical fiber 51.

Next, the cutter used in the optical fiber end surface processing apparatus of the present invention will be described.

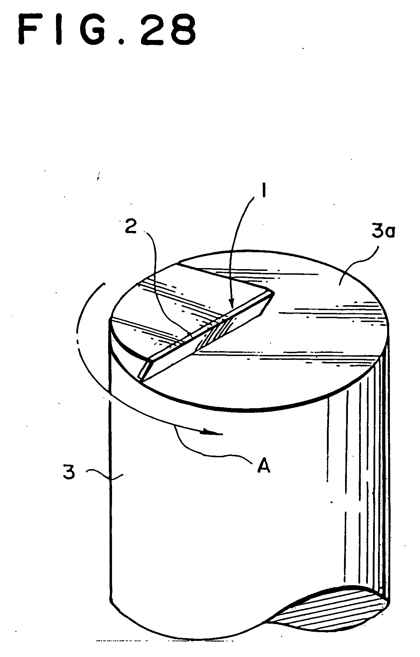

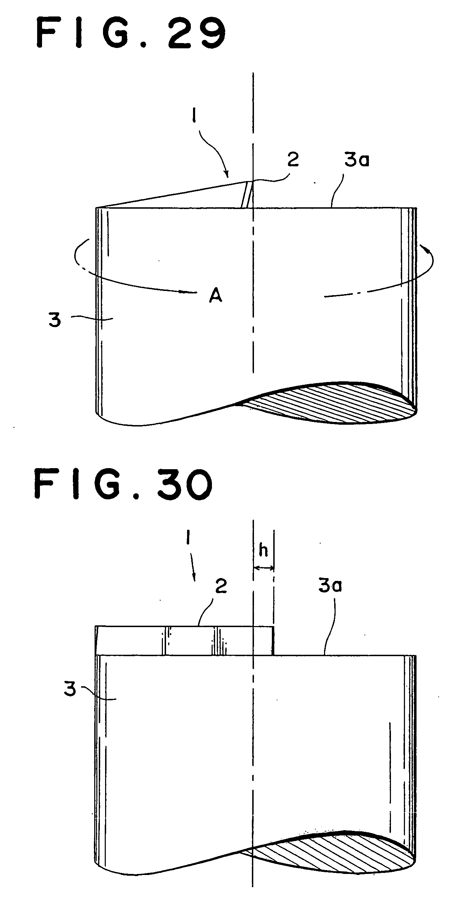

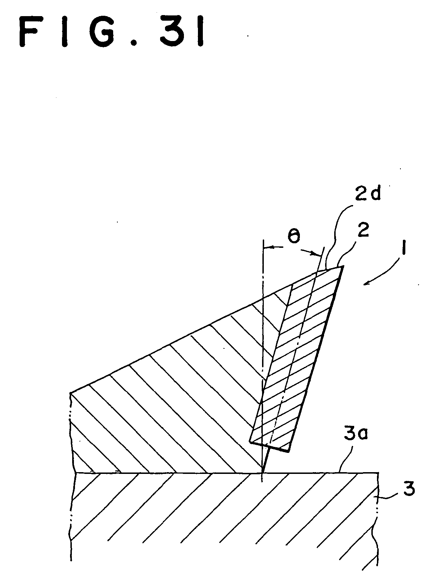

Figs. 28 through 31 show a cutter to be used in an optical fiber end surface processing apparatus according to the present invention, of which Fig. 28 is a perspective view thereof, Fig. 29 is a front view thereof, Fig. 30 is a side view thereof, and Fig. 31 is a central longitudinal sectional view thereof.

This cutter 1 is provided on the end surface 3a of the mounting shaft 3 so as to extend mainly radially from the axis thereof. The expression "mainly radially" implies that the cutter may extend somewhat beyond the axis. In the case shown in Fig. 30, the cutter extends beyond the axis by a length h. This cutter 1 is inclined in the rotating direction (the direction of the arrow A) with respect to the axial direction of the shaft portion 3. In this example, it is inclined by an angle θ as shown in Fig. 31. Thus, when the cutter 1 rotates in the direction of the arrow A, the cutting edge 2 of the cutter 1 cuts into the optical fiber, so that the cutting of the end surface can be performed in a satisfactory manner.

Further, as shown in an enlarged state in Fig. 31, the apex surface 2d of the cutter 1 is a surface oppositely inclined from the cutting edge 2 with respect to the rotating direction (the direction of the arrow A), whereby, even if the cutter 1 is rotating after the cutting of an optical fiber, it does not come into contact with the processed end surface of the optical fiber to adversely affect the same, making it possible to perform end surface cutting with high accuracy.

It is desirable that at least the cutting edge 2 of this cutter 1 be formed of diamond, whereby a satisfactory cutting processing is possible independently of the material of the optical fiber. An optical fiber is composed of a core portion, a clad portion, a jacket, etc. , which are respectively formed of different materials, the core portion being formed of glass or plastic. However, independently of the materials of the optical fiber, it is possible to perform a satisfactory cutting processing as long as at least the cutting edge 2 of the cutter 1 is formed of diamond. Further, it is possible to easily perform end surface processing on an optical fiber with a connector attached to the terminal end thereof.

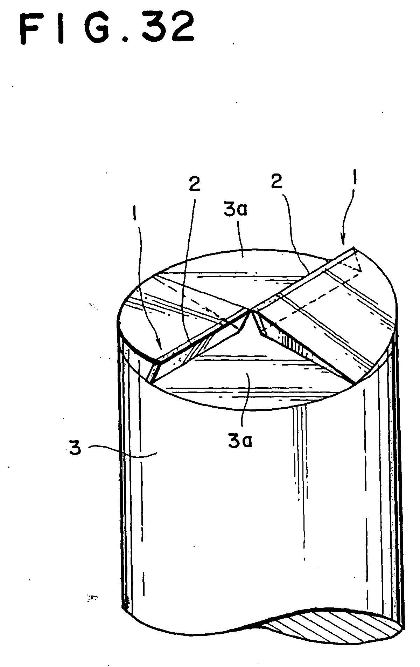

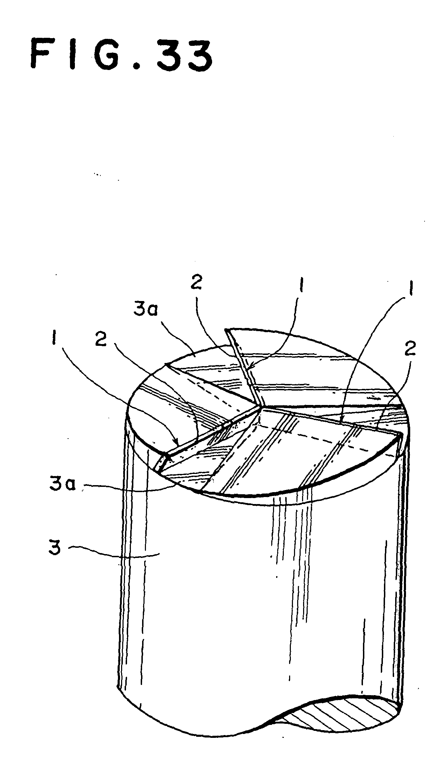

While in this example only one cutter 1 is used, it is also possible to use a plurality of cutters. Fig. 32 is a perspective view showing a case in which two cutters are used, and Fig. 33 is a perspective view showing a case in which three cutters are used. The components that are the same as those of the above-described embodiments are indicated by the same reference numerals, and a detailed description of such components will be omitted. When a plurality of cutters 1 thus radially exist on the end surface 3a of the mounting shaft 3 so as to extend mainly radially from the axis, the end surface of an optical fiber is cut by a large number of cutters 1, so that it is possible to efficiently perform a cutting processing with high accuracy.

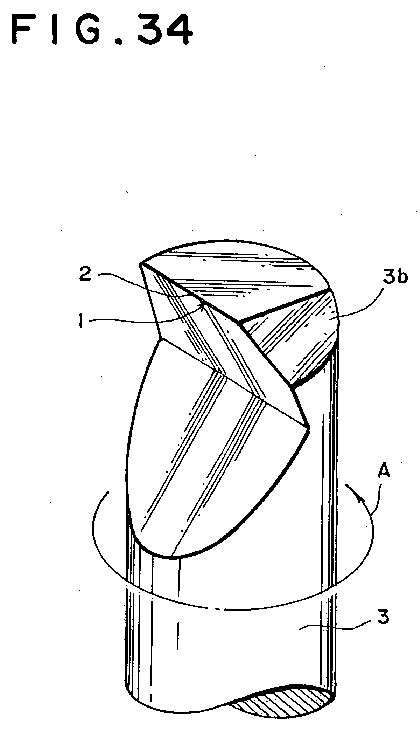

Further, while in the above embodiments the cutter 1 is a component separate from the mounting shaft 3 and is firmly attached to the end surface of the mounting shaft 3, it is also possible for the cutter 1 to be formed integrally with the mounting shaft 3. Fig. 34 is a perspective view showing a case in which the cutter 1 is formed integrally with the mounting shaft 3. In this cutter 1 also, there is an inclination in the rotating direction (the direction of the arrow A). In this example also, the cutter 1 exists on the end surface 3a of the mounting shaft 3 so as to extend mainly radially, so that the portion on the other radial side is formed as a cutout inclined surface 3b.

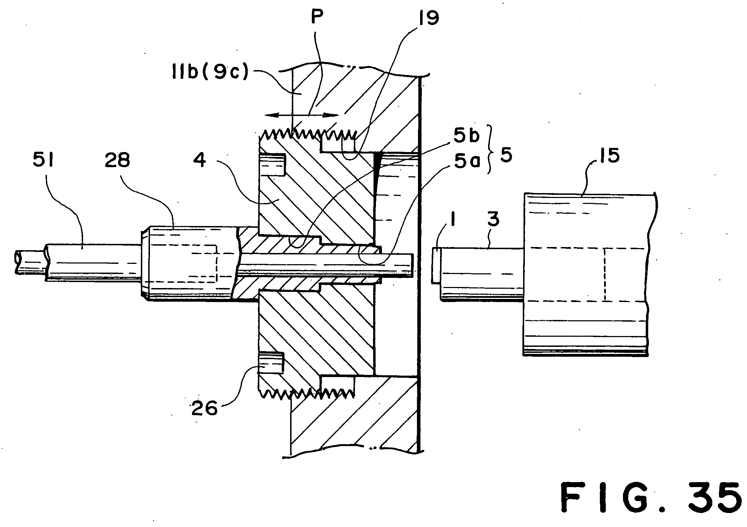

Fig. 35 is a main portion sectional view showing a case in which cutting is performed on an optical fiber 51 with a connector 28 attached thereto. The guide hole 5 of the guide member 4 of this example consists of a small diameter portion 5a and a large diameter portion 5b, and the optical fiber 51 can be inserted so as to be in conformity with this guide hole 5 even when a connector is attached to the optical fiber. Thus, it is possible to insert the optical fiber 51 with the connector 28 into the guide hole 5 of the guide member 4, and to perform end surface processing by the rotating cutter 1, with the connector 28 attached to the optical fiber 51. That is, when the optical fiber 51 with the connector 28 is inserted into the guide hole 5 of the guide member 4, its forward end abuts the rotating cutter 1 to be thereby cut into a predetermined shape. The guide member 4 is screw-connected with the end surface of the cap body 11b of the case 11 or the guide member mounting portion 9c of the motor mounting member 9, and advances or retreats through normal or reverse rotation of the guide member 4, thus making it possible to arbitrarily adjust the processing position of the end of the optical fiber 51 and the processing depth. It is desirable for the guide member 4 to be endowed with a chucking function as shown in Figs. 8 through 12.

## Claims

1. An optical fiber end surface processing apparatus (100) for performing cutting on an end surface of an optical fiber with a cutter (1), comprising: the cutter (1) that can be rotated by a drive source (13); and a guide member (4) provided with a guide hole (5) extending therethrough, the cutter (1) being contained in a case (11), the guide member (4) being provided to the case (11) such that the cutter (1) and the guide hole (5) are opposed to each other, the optical fiber being guided toward and into abutment against the cutter (1) while being inserted into the guide hole (5) of the guide member (4) so that the optical fiber end surface is cut by the cutter (1) that rotates, the processing apparatus (100) being **characterized in that** the cutter (1) and the guide member (4) are arranged such that a rotation center of the cutter (1) and an axis of the guide hole (5) of the guide member (4) are offset from the same axis.

2. An optical fiber end surface processing apparatus (100) according to claim 1, **characterized in that** the cutter (1) exists on an end surface of a mounting shaft (3) so as to be offset from an axis of the shaft (3) mainly in a radial direction, and the guide member (4) is arranged such that the axis of the guide hole (5) thereof is offset from an axis of a mounting shaft (3) of the cutter (1).

3. An optical fiber end surface processing apparatus (100) according to claim 1, **characterized in that** a plurality of the cutters (1) extend mainly radially with respect to an axis of an end surface of a shaft portion (3).

4. An optical fiber end surface processing apparatus (100), comprising: a cutter (1) that can be rotated by a drive source (13); and a guide member (4) provided with a guide hole (5) extending therethrough, the cutter (1) being contained in a case (11), the guide member (4) being provided to the case (11) such that the guide member (4) is opposed to the case (11) and that an axis of the guide hole (5) is matched with a rotation center of the cutter (1), the optical fiber being guided toward and into abutment against the cutter (1) while being inserted into the guide hole (5) of the guide member (4) so that the optical fiber end surface is cut by the cutter (1) that rotates, the processing apparatus (100) being **characterized in that** the guide member (4) has a chucking function.

5. An optical fiber end surface processing apparatus according to claim 1 or 4, **characterized in that** the case (11) constitutes a holding portion (12) or that the holding portion (12) is integrally or detachably provided on the case (11).

6. An optical fiber end surface processing apparatus (100) according to any one of claims 1, 4, and 5, **characterized in that** the case (11) or the holding portion (12) contains a battery or contains a battery and a charger.

7. An optical fiber end surface processing apparatus (100) according to claim 1 or 4, **characterized in that** the case (11) comprises: a drive portion (102) containing a motor (13) or containing a motor (13) and a battery; and a processing portion (101) comprising a cutter (1) and a guide member (4), the drive portion (102) and the processing portion (101) being separable from each other.

8. An optical fiber end surface processing apparatus (100) according to any one of claims 1, 2, 3, and 4, **characterized in that** the cutter (1) is provided detachably on a motor drive shaft (14) directly or through the intermediation of a member to be connected to the motor drive shaft (14).

9. An optical fiber end surface processing apparatus according to any one of claims 1, 2, and 4, **characterized in that** the guide member (4) is mounted on a motor mounting member (9) shared by the motor (13).

10. An optical fiber end surface processing apparatus according to any one of claims 1, 2, 4, 7, and 9, **characterized in that** the guide member (4) is mounted to the case (11) or a motor mounting member (9) shared by the motor (13) such that an axial movement amount can be adjusted.

11. An optical fiber end surface processing apparatus (100) according to claim 10, **characterized in that** the guide member (4) is provided with a male screw (24) on an outer peripheral surface thereof, and that a screw hole (23) that can be threadedly engaged with the guide member (4) is provided in the case (11) or the motor mounting member (9) shared by the motor (13), the guide member (4) being threadedly engaged with the guide member (4), the axial movement amount of the guide member (4) being adjustable through normal and reverse rotation of the guide member (4).

12. An optical fiber end surface processing apparatus (100) according to any one of claims 1, 2, 7, 9, and 10, **characterized in that** the guide member (4) has a chucking function.

13. An optical fiber end surface processing apparatus (100) according to claim 12, **characterized in that** the guide member (4) is formed as a truncated cone with the guide hole (5) and has a chuck structure with a plurality of slits (25), and that a male screw (24) is provided on an outer peripheral surface of the guide member (4), the optical fiber inserted into the guide hole (5) being chucked by threadedly engaging the male screw (24) with a truncated-cone-shaped screw hole (23) provided in the case (11) or the motor mounting member (9) shared by the motor (13).

14. An optical fiber end surface processing apparatus (100) according to claim 12, **characterized in that** the guide member (4) is formed in a short-axis or a truncated-cone-shaped configuration with a guide hole (5) and has a chuck structure with a plurality of slits (25), and that a guide member mounting hole (17) provided in the case (11) or the mounting member (9) shared by the motor (13) is a circular hole of a truncated cone shape or of a uniform diameter, the optical fiber inserted into the guide hole (5) being chucked by mounting the guide member (4) by inserting the guide member (4) into the guide member mounting hole (17).

15. An optical fiber end surface processing apparatus (100) according to any one of claims 1, 2, 4, 7, 9, 10, 11, 12, 13, and 14, **characterized in that** the guide member (4) is mounted to a movement amount adjusting member allowing adjustment of axial movement amount with respect to the cutter (1).

16. An optical fiber end surface processing apparatus (100) according to any one of claims 10, 11, 12, 13, 14, and 15, **characterized in that** a guide member mounting surface of the case (11) or the motor mounting member (9) shared by the motor (13) and the end surface of the guide member (4) are provided with scales allowing measurement of a rotating amount of the guide member (4).

17. An optical fiber end surface processing apparatus (100) according to any one of claims 1, 2, 4, 7, 9, 10, 11, 12, 14, 15, and 16, **characterized in that** one or a plurality of the guide holes (5) of the guide member (4) are provided at offset positions of the guide member (4).
